# FASCICULE DE BREVET EUROPEEN

(11) **EP 1 683 162 B1**
(45) Date de publication et mention de la délivrance du brevet: **25.09.2013**
(21) Numéro de dépôt: 04805726.9
(22) Date de dépôt: 05.10.2004
(51) Int. Cl.: G21C 3/62

(54) **PROCEDE DE FABRICATION DE PASTILLES D' UN COMBUSTIBLE NUCLEAIRE A BASE D'OXYDE MIXTE (U,Pu)O2 OU (U,Th)O2**
VERFAHREN ZUR HERSTELLUNG VON KERNBRENNSTOFFPELLETS AUF DER BASIS VON GEMISCHTEN OXIDEN (U,PU)O2 ODER (U,TH)O2
METHOD OF FABRICATION OF NUCLEAR FUEL PELLETS BASED ON MIXED OXIDES (U,PU)O2 OR (U,TH)O2

(30) Priorité: 06.10.2003 FR 0311683
(43) Date de publication de la demande: 26.07.2006
(73) Titulaire: Commissariat à l'Énergie Atomique et aux Énergies Alternatives, 75015 Paris (FR); COMPAGNIE GENERALE DES MATIERES NUCLEAIRES, 78140 Velizy Villacoublay (FR)
(72) Inventeur: DUBOIS, Sylvie, F-13610 Le Puy Ste Reparade (FR); Cecilia, Gilles, F-13090 Aix en Provence (FR)
(74) Mandataire: Ahner, Philippe
(86) Numéro de dépôt international: PCT/FR2004/050483
(87) Numéro de publication internationale: WO 2005/034138

(56) Documents cités:
- WO-A-00/49621
- WO-A-01/03143
- FR-A- 2 738 076
- FR-A- 2 827 071
- US-B1- 6 221 286

## Description

### DOMAINE TECHNIQUE

L'invention se rapporte à un procédé de fabrication de pastilles d'un combustible nucléaire à base d'oxyde mixte d'uranium et de plutonium ou d'uranium et de thorium.

En particulier, l'invention se rapporte à un procédé permettant de préparer des pastilles d'un combustible nucléaire à base d'oxyde mixte (U,Pu)O₂-ou combustible MOX - qui présentent une microstructure hétérogène, c'est-à-dire formée d'au moins deux phases distinctes, l'une dite uranifère car sensiblement exempte de plutonium, et l'autre dite plutonifère car riche en plutonium, et qui se caractérisent à la fois par une augmentation volumique de la phase plutonifère et par une augmentation de la taille des grains de cette phase par rapport à celles observées dans les pastilles de combustible MOX à microstructure hétérogène fabriquées jusqu'à présent.

De telles pastilles présentent un grand intérêt pour la fabrication de crayons combustibles destinés à de nombreux types de réacteurs nucléaires, notamment à des réacteurs à eau légère.

### ETAT DE LA TECHNIQUE ANTERIEURE

Le combustible, qui est utilisé dans le coeur d'un réacteur nucléaire, a pour rôle de fournir de l'énergie sous forme de chaleur par fission des nucléides (uranium, plutonium, thorium, ...) qu'il renferme, sous l'action des neutrons.

En toute situation de fonctionnement, ce combustible doit satisfaire simultanément à plusieurs critères dont les plus importants sont :
1. d'évacuer l'énergie thermique dégagée par la fission vers le fluide caloporteur qui, à son tour, en assure l'évacuation hors du coeur du réacteur.
2. de supporter d'éventuelles variations de puissance du réacteur sans perdre son intégrité.
3. de confiner les produits de fission : le combustible est, en effet, conçu et réalisé de façon à empêcher les produits de fission ou de capture engendrés par les réactions nucléaires de s'échapper du coeur du réacteur.

Pour ce faire, la matière active est enfermée dans une enveloppe étanche, appelée gaine et qui constitue ce que les spécialistes de sûreté nucléaire nomment la "première barrière" de sûreté. L'intégrité de cette gaine doit être parfaite et le demeurer pendant tout le temps de séjour du combustible dans le réacteur.

Cette exigence est directement liée au critère précédent, certains régimes transitoires de puissance induisant, en effet, des Interactions Pastilles-Gaine (IPG) ou "Pellet Cladding Mechanical Interaction" (PCMI) en langue anglaise, consécutives à une dilatation des pastilles, qui sont susceptibles de provoquer dans certains cas une rupture de la gaine et, partant, le passage des produits de fission dans le fluide caloporteur.

Ainsi, ce critère de confinement, qui touche à la sûreté nucléaire, doit être satisfait avant tous les autres.
4. de limiter le relâchement des gaz de fission : en effet, le relâchement de ces gaz, qui est un phénomène inévitable, doit être réduit au maximum pour ralentir le plus possible l'augmentation de la pression à l'intérieur de la gaine, une élévation trop importante de cette pression étant susceptible, là également, de conduire à une rupture de cette gaine et à une libération des produits de fission dans le fluide caloporteur.

Ce quatrième critère est déterminant en termes de rentabilité économique et l'un des buts de l'industrie nucléaire est de parvenir à augmenter le taux de combustion des combustibles de manière à en optimiser la gestion.

En ce qui concerne les combustibles nucléaires MOX, à base d'oxyde mixte (U,Pu)O₂, les procédés proposés à ce jour pour leur fabrication se répartissent en deux grandes familles :
- une première famille qui regroupe les procédés dits de "co-broyage direct", dans lesquels une poudre de UO₂ et une poudre de PuO₂ sont mélangées et co-broyées d'emblée dans les proportions voulues pour obtenir la teneur en plutonium spécifiée, c'est-à-dire la teneur en plutonium que présente le combustible en fin de fabrication, et le mélange résultant est pastillé, puis fritté ; et
- une deuxième famille qui regroupe les procédés dits "Broyage-Dilution", dans lesquels on constitue au départ un mélange primaire de poudres "surconcentré" en plutonium par rapport à la teneur en plutonium spécifiée, que l'on dilue secondairement par adjonction de dioxyde d'uranium pour obtenir un mélange final de poudres ; c'est ce mélange final que l'on pastille et que l'on fritte.

Dans cette deuxième famille de procédés, le procédé de référence est le procédé MIMAS (**MI**cronized **MAS**ter Blend) dans lequel on soumet à un pastillage, puis à un frittage, une charge de poudres préparée comme suit :
- réalisation d'un mélange primaire de poudres à teneur en plutonium supérieure à la teneur en plutonium spécifiée, par co-broyage d'une poudre de UO₂, d'une poudre de PuO₂ et éventuellement de chamotte (c'est-à-dire une poudre d'oxyde mixte d'uranium et de plutonium provenant du recyclage des rebuts de fabrication), jusqu'à obtention d'une poudre micronisée et intimement mélangée ;
- réalisation d'un mélange final de poudres ayant la teneur en plutonium spécifiée par dilution de la poudre ainsi micronisée avec une poudre de UO₂ et éventuellement de la chamotte, et dans lequel on incorpore des additifs destinés à faciliter le pastillage de ce mélange final (lubrifiant) et/ou à produire une certaine porosité au cours du frittage (agent porogène).

Les deux familles de procédés évoquées ci-dessus conduisent à des combustibles MOX présentant des microstructures très différentes.

Ainsi, les combustibles MOX obtenus par les procédés de co-broyage direct se caractérisent par une répartition uniforme de l'uranium et du plutonium sous la forme d'une phase unique (U,Pu)O₂ à teneur en plutonium proche de la teneur spécifiée, cette uniformité de répartition résultant d'une inter-diffusion chimique des cations U et Pu sous l'effet de la température de frittage (≈ 1700°C).

Par contre, dans les procédés "Broyage-Dilution", les coefficients d'interdiffusion des cations U et Pu sont faibles en sorte qu'à l'issue du frittage, le mélange primaire de poudres se retrouve dans les combustibles sous la forme d'amas (U,Pu)O₂ riches en plutonium (ces amas correspondant à des agglomérats se formant au cours du broyage) dispersés dans une matrice d'UO₂. Il en résulte que les combustibles MOX produits par les procédés "Broyage-Dilution" ont, eux, une microstructure type composée de trois phases, à savoir :
* une phase uranifère UO₂ prédominante, exempte de plutonium ;
* une phase constituée d'amas plutonifères (U,Pu)O₂ riches en plutonium et qui sont la trace du mélange primaire surconcentré en plutonium ; ainsi, leur teneur massique en plutonium est, par exemple, de l'ordre de 30% ; et
* une phase d'enrobage (U,Pu)O₂ à teneur en plutonium intermédiaire, par exemple de l'ordre de 10%.

Il peut paraître à première vue absurde de privilégier les procédés de type "Broyage-Dilution" puisqu'ils se traduisent par une homogénéité du mélange de poudres soumis au pastillage et au frittage et, partant, des combustibles inférieure à celle obtenue par les procédés de co-broyage direct, avec une surconcentration locale en plutonium qui entraîne un relâchement accru des gaz de fission par rapport à celui observé pour un combustible MOX à teneur moyenne uniformément répartie en plutonium.

En réalité, ce n'est pas le cas dans la mesure où il a été vérifié que, lors des rampes de puissance, aucune rupture de gaine liée à d'éventuelles interactions pastilles-gaine n'est intervenue avec des combustibles MOX produits par un procédé "Broyage-Dilution", ce qui est un critère déterminant en matière de sûreté.

De plus, les combustibles MOX issus des procédés "Broyage-Dilution" sont plus faciles à retraiter, une fois irradiés, que ceux obtenus par les procédés de co-broyage direct, et leurs rebuts de fabrication sont également plus faciles à recycler.

Il existe toutefois un réel besoin de combustibles MOX qui, tout en étant fabriqués par un procédé "Broyage-Dilution", présentent une plus grande homogénéité que celle observée dans les combustibles MOX obtenus jusqu'à présent par ce type de procédés, et en particulier une meilleure répartition des amas plutonifères (U/Pu)O₂ au sein de la matrice d'UO₂, de manière à diminuer le relâchement gazeux, notamment en régimes transitoires de puissance, et à optimiser ainsi leur utilisation.

La demande EP-A-1 081 716 **[1]** propose, pour obtenir une répartition plus homogène du plutonium dans des pastilles d'un combustible MOX produites par un procédé de type MIMAS, de diluer le mélange primaire UO₂/PuO₂ avec des billes de UO₂ de 20 à 50 µm de diamètre, ces billes étant obtenues en faisant précipiter, dans un bain d'ammoniac, de fines gouttelettes d'une solution aqueuse de nitrate d'uranyle contenant 0,5 à 2% d'épaississants organiques de type éthers de cellulose ou dextran, puis en soumettant les billes ainsi formées, après lavage et séchage par distillation azéotropique, à un traitement thermique, d'abord sous atmosphère oxydante pour les convertir en sesquioxyde d'uranium (U₃O₈), puis sous atmosphère réductrice pour les convertir en UO₂.

En variante, la demande EP-A-1 081 716 propose de préparer le mélange primaire UO₂/PuO₂ avec des billes obtenues de façon analogue mais à partir de nitrate d'uranyl-plutonium.

Il est à noter qu'aucune indication n'est fournie dans ce document sur le gain réellement obtenu en matière d'homogénéité de répartition du plutonium.

La demande FR-A-2 738 076, correspondant au brevet US-A-5,841,200, **[2]** décrit, elle, un procédé de type MIMAS permettant de produire des pastilles d'un combustible MOX qui présentent une taille de grains plus élevée tout en étant aptes à être, d'une part, rectifiées à sec, et, d'autre part, dissoutes dans les solutions nitriques classiquement utilisées pour le retraitement des combustibles nucléaires irradiés.

Dans ce procédé, une cire organique de formule C₁₇H₃₇NO₃S est ajoutée au mélange primaire UO₂/PuO₂ à une concentration massique de 0,1 à 1%.

L'adjonction de cette cire a pour effet de faciliter la répartition de la poudre de PuO₂ au sein du mélange primaire de poudres UO₂/PuO₂, ce qui se traduit par une amélioration de la répartition du plutonium dans les amas plutonifères (U,Pu)O₂ issus du mélange primaire de poudres. Elle a également pour effet de réduire la formation d'agglomérats au cours du co-broyage de ces poudres, d'améliorer la coulabilité du mélange final, et d'augmenter la taille des grains dans les zones riches en plutonium.

En revanche, ce document ne fait pas état d'un éventuel effet de la cire sur la répartition des amas plutonifères (U/Pu)O₂ dans la matrice d'UO₂.

Les Inventeurs se sont donc fixé pour but de fournir un procédé "Broyage-Dilution" de fabrication de pastilles d'un combustible nucléaire à base d'oxyde mixte d'uranium et de plutonium qui conduise à des pastilles présentant une plus grande homogénéité, et en particulier une répartition plus homogène des amas plutonifères (U/Pu)O₂ au sein de la matrice d'UO₂, que les pastilles de combustible MOX produites jusqu'à présent par le procédé MIMAS classique.

Ce but est atteint par le procédé tel que revendiqué dans la revendication 1.

### EXPOSÉ DE L'INVENTION

La présente invention propose un procédé de fabrication de pastilles d'un combustible nucléaire à base d'oxyde mixte (U,Pu)O₂ ou (U,Th)O₂, ayant une teneur spécifiée en plutonium ou en thorium, lequel procédé comprend les étapes suivantes :
a) préparation d'un mélange primaire de poudres ayant une teneur en plutonium ou en thorium supérieure à la teneur spécifiée du combustible, par co-broyage d'une poudre P1 de UO₂ et d'une poudre P2 de PuO₂ ou de ThO₂,
b) tamisage du mélange primaire de poudres,
c) préparation d'un mélange final de poudres ayant la teneur spécifiée en plutonium ou en thorium du combustible par mélange du tamisat obtenu à l'étape b) avec une poudre P3 de UO₂ et, éventuellement, un ou plusieurs adjuvants,
d) pastillage du mélange final de poudres ainsi obtenu, et
e) frittage des pastilles obtenues,
et est caractérisé en ce qu'on incorpore au moins un composé choisi dans le groupe constitué par les oxydes de chrome, d'aluminium, de titane, de magnésium, de vanadium et de niobium, les précurseurs de ces oxydes et les composés inorganiques aptes à apporter l'élément soufre au cours de l'étape e), dans au moins l'une des poudres P1, P2 et P3 et/ou dans au moins l'un des mélanges primaire ou final de poudres.

Ainsi, le procédé conforme à l'invention est un procédé qui reprend les caractéristiques essentielles du procédé MIMAS, mais dans lequel la charge de poudres destinée à être pastillée et frittée contient au moins un oxyde de chrome, d'aluminium, de titane, de magnésium, de vanadium ou de niobium, ou bien un précurseur de l'un de ces oxydes, ou encore un composé inorganique apte à apporter aux pastilles du soufre au cours de leur frittage, les Inventeurs ayant, en effet, constaté que la présence d'un tel composé dans ladite charge de poudres se traduit, de manière surprenante, par une distribution volumique plus importante du plutonium dans les pastilles après frittage, traduisant une plus grande homogénéité de ces pastilles, et en particulier une répartition plus homogène des amas plutonifères (U,Pu)O₂ dans la matrice d'UO₂.

Les Inventeurs ont également constaté qu'un bénéfice similaire est obtenu sur la distribution volumique du thorium dans le cas de pastilles de combustible à base d'oxyde mixte (U,Th)O₂.

Au sens de la présente invention, on entend par précurseur d'un oxyde de chrome, d'aluminium, de titane, de magnésium, de vanadium ou de niobium, tout composé apte à former un tel oxyde dans les pastilles au cours de leur frittage, c'est-à-dire pendant l'étape e) du procédé.

Il convient de noter que l'utilisation d'oxydes métalliques et de composés soufrés dans la fabrication de pastilles de combustible nucléaire n'est pas nouvelle en elle-même.

Ainsi, l'emploi d'oxydes métalliques a déjà été proposé dans le brevet US 6,235,223 **[3]** pour améliorer la rétention des gaz de fission dans des pastilles d'un combustible d'oxyde mixte (U,Pu)O₂ préparées par un procédé de co-broyage direct. De même, il a été proposé dans la demande internationale PCT WO-A-00/49621 [4] d'ajouter à un combustible à base d'UO₂, de ThO₂ ou de PuO₂ du chrome sous forme de Cr₂O₃, également dans le but d'augmenter le temps de rétention des gaz de fission dans ce combustible.

Par ailleurs, la demande FR-A-2 827 071 **[5]** décrit un procédé de fabrication d'un combustible à base de UO₂ ou d'un oxyde mixte (U,Pu)O₂, qui est également destiné à améliorer la rétention des gaz de fission et dans lequel tout ou partie de la poudre de UO₂ utilisée est préalablement traitée par un gaz soufré tel que CS₂ ou H₂S, de manière à ce qu'elle renferme du soufre, notamment sous forme d'oxysulfure d'uranium.

Ce qui, en revanche, est nouveau est le fait d'utiliser des oxydes métalliques et des composés soufrés inorganiques dans un procédé de type MIMAS, et ce qui est totalement inattendu est que cette utilisation se traduise par une distribution volumique plus importante du plutonium ou du thorium accompagnée d'un grossissement de la taille des grains.

Selon un premier mode de mise en oeuvre préféré du procédé conforme à l'invention, le composé est du sesquioxyde de chrome (Cr₂O₃) ou un précurseur de celui-ci comme, par exemple, le chromate d'ammonium de formule (NH₄)₂CrO₄, l'acétate de chrome de formule Cr(CH₃COO)₃ ou le nitrate de chrome de formule Cr(NO₃)₃.

Lorsque le composé est du Cr₂O₃, alors il est, de préférence, présent dans le mélange final de poudres en une proportion massique de 500 à 5000 ppm et, mieux encore, de 1500 à 3000 ppm. S'il s'agit d'un précurseur de cet oxyde, la quantité de précurseur présent dans le mélange final de poudres est ajustée de manière à conférer aux pastilles, au cours de l'étape e), une proportion massique en Cr₂O₃ comprise dans les gammes précitées.

En variante, le composé peut également être du trioxyde d'aluminium Al₂O₃, du dioxyde de titane TiO₂ ou du trioxyde de titane Ti₂O₃, de l'oxyde de magnésium MgO, du pentoxyde de vanadium V₂O₅ ou du pentoxyde de niobium Nb₂O₅.

Selon un autre mode de mise en oeuvre préféré du procédé conforme à l'invention, le composé est un composé inorganique apte à apporter l'élément soufre au cours de l'étape e) de ce procédé.

Conformément à l'invention, ce composé est, de préférence, de l'oxysulfure d'uranium (UOS) mais il peut également être un autre composé du système ternaire U-O-S comme UO₂SO₃, ou un composé soufré n'appartenant pas à ce système comme, par exemple, US₂ ou (NH₄) N (SO₃NH₄)₂.

Lorsque le composé est un composé apte à apporter du soufre, alors il est, de préférence, présent dans le mélange final de poudres en une proportion massique telle qu'il permet d'apporter aux pastilles de 50 à 2000 ppm de soufre élémentaire et, mieux encore, de 50 à 1000 ppm de soufre élémentaire. Ainsi, par exemple, si ce composé est de l'UOS, la proportion massique du mélange final de poudres en UOS est préférentiellement de 440 à 18000 ppm (0,044%-1,8%) et, de façon particulièrement préférée, de 440 à 9000 ppm (0,044%-0,9%).

Comme précédemment mentionné, le composé peut être incorporé dans l'une ou plusieurs des poudres P1 (UO₂), P2 (PuO₂ ou ThO₂) et P3 (UO₂) utilisées pour préparer les mélanges primaire et final de poudres. On préfère toutefois l'incorporer directement dans l'un de ces mélanges ou, en variante, dans ces deux mélanges, pour des raisons de simplicité de mise en oeuvre.

Lorsque tout ou partie du composé est incorporé dans le mélange primaire de poudres, cette incorporation est réalisée soit au cours de l'étape a), auquel cas le composé est broyé conjointement avec les poudres P1 et P2, soit entre l'étape a) et l'étape b) du procédé, auquel cas ce dernier comprend une étape supplémentaire qui consiste à mélanger le mélange primaire obtenu à l'étape a) avec le composé jusqu'à obtention d'un ensemble homogène.

Cette opération de mélange est, de préférence, effectuée dans un mélangeur énergétique tel qu'un mélangeur à turbine ou un broyeur à couteau.

Lorsque tout ou partie du composé est incorporé dans le mélange final de poudres, cette incorporation est, de préférence, réalisée au cours de l'étape c), auquel cas le tamisat obtenu à l'étape b) est mélangé avec le composé et le ou les éventuels adjuvants jusqu'à obtention d'un ensemble homogène.

Cette opération de mélange est, elle, préférentiellement effectuée dans un mélangeur doux, par exemple de type Turbula à mouvement oscillo-rotatif, afin d'éviter de casser les agglomérats de poudre formant le tamisat.

Dans tous les cas, le composé est, de préférence, utilisé sous forme pulvérulente.

Conformément à l'invention, l'étape a) de préparation du mélange primaire de poudres est réalisée en co-broyant, par exemple dans un broyeur à boulets, les poudres P1 (UO₂) et P2 (PuO₂ ou ThO₂), éventuellement en présence du composé, dans des proportions telles que la teneur massique en plutonium ou en thorium de ce mélange soit comprise entre 25 et 35%.

Ce co-broyage, qui peut également être réalisé dans un autre type de broyeur comme, par exemple, un broyeur à attrition ou un broyeur à jet de gaz, dure généralement de 3 à 6 heures. Il induit la formation d'agglomérats de poudre conduisant à un spectre granulométrique très étalé du mélange issu du broyeur, de quelques µm (microns) à plus de 1 mm.

L'étape b) de tamisage du mélange primaire de poudres, qui sert à calibrer ce mélange, est réalisée au moyen d'un tamis, par exemple en acier inoxydable, présentant, de préférence, des ouvertures de dimension inférieure ou égale à 250 µm afin de ne retenir que les agglomérats de poudre dont la taille est au plus égale à cette dimension.

L'étape c) est, elle, réalisée de manière à amener la teneur massique en plutonium ou en thorium du mélange final de poudres à une valeur de 3 à 12%.

Conformément à l'invention, de la chamotte provenant du recyclage des rebuts de fabrication peut être ajoutée, soit au mélange primaire de poudres, soit au mélange final de poudres, soit encore aux deux.

Par ailleurs, le ou les adjuvants susceptibles d'être incorporés dans le mélange final de poudres au cours de l'étape c) sont essentiellement un ou plusieurs lubrifiants destinés à faciliter le pastillage de ce mélange comme le stéarate de zinc ou le stéarate d'aluminium, et/ou un ou plusieurs agents porogènes destinés à abaisser et à contrôler la densité des pastilles comme l'azodicarbonamide, connu sous le nom commercial d'AZB, ce(s) agent(s) lubrifiant(s) et ce(s) agent(s) porogène(s) étant préférentiellement ajoutés dans des proportions respectives ne dépassant pas 0,5% en masse de la masse totale du mélange final de poudres.

L'étape d) de pastillage du mélange final de poudres est réalisée au moyen d'une presse, par exemple hydraulique, dont les paramètres sont optimisés et contrôlés en fonction des caractéristiques géométriques et d'aspect des pastilles obtenues par des prélèvements réguliers. Une pression convenable est, par exemple, de 500 MPa.

L'étape e) de frittage est, de préférence, effectuée à une température de 1700°C ou proche de celle-ci, sous une atmosphère gazeuse conduisant à un potentiel d'oxygène ΔGO₂ de -476 à -372 KJ/mol à la température de frittage. Ainsi, il peut notamment s'agir d'un mélange humidifié d'argon et d'hydrogène contenant 5% d'hydrogène et dont la teneur en eau est de 100 à 2500 ppm, cette teneur en eau étant préférentiellement d'environ 850 ppm dans le cas où les pastilles renferment du Cr₂O₃, et d'environ 1000 ppm dans le cas où elles renferment de l'UOS.

A l'issue du frittage, les pastilles peuvent être soumises à une rectification, laquelle peut être effectuée sur une rectifieuse sans centre et à sec, afin d'obtenir des pastilles satisfaisant à la spécification de diamètre.

Les pastilles obtenues par le procédé conforme à l'invention présentent les caractéristiques suivantes :
- une densité hydrostatique de l'ordre de 95 à 97% de la densité théorique ;
- une microstructure caractérisée, sur la base d'analyses optiques (microscope optique), par deux phases distinctes : une phase uranifère comprenant peu ou pas de plutonium et une phase plutonifère ou thorifère comprenant du plutonium ou du thorium en quantité notable ;
- une microstructure caractérisée, sur la base d'analyses électroniques (MEB ou analyses à la microsonde électronique ou microsonde de Castaing), par deux à quatre phases distinctes suivant la précision de la mesure et la concentration en plutonium ou en thorium ;
- une phase plutonifère ou thorifère qui, sur la base d'analyses optiques, apparaît occuper au moins 50%, généralement plus de 60% et peut atteindre 70%, voire 80% du volume total des pastilles et qui, sur la base d'analyses électroniques, apparaît occuper plus de 70% et peut atteindre 95% du volume total des pastilles.

A titre de comparaison, la phase plutonifère d'un combustible MOX produit par le procédé MIMAS classique apparaît représenter, sur la base d'analyses optiques, au mieux 45% du volume total des pastilles et, sur la base d'analyses électroniques, au mieux 64% de ce volume.

De plus, les analyses à la microsonde électronique montrent que, dans les pastilles obtenues par le procédé conforme à l'invention, la diminution du volume occupé par la phase uranifère s'accompagne d'une diminution du volume occupé par les amas plutonifères ou thorifères et ce, au profit d'une phase d'enrobage à teneur intermédiaire en plutonium ou en thorium qui augmente d'un facteur au moins égal à 1,5 et généralement compris entre 1,6 et 2, traduisant une plus grande homogénéité de ces pastilles, et en particulier une répartition plus homogène des amas plutonifères ou thorifères dans la matrice d'UO₂.

Par ailleurs, une attaque chimique de chacune des phases constituant les pastilles après frittage met en évidence une taille de grains d'environ 5-6 µm dans la phase uranifère, alors qu'elle est généralement comprise entre 10 à 20 µm et peut atteindre 40, voire 50 µm, dans la phase plutonifère ou thorifère.

A titre de comparaison, la taille des grains de la phase plutonifère d'un combustible MOX produit par le procédé MIMAS classique est de 5-6 µm, comme celle des grains de la phase uranifère.

Ainsi, à une répartition plus homogène du plutonium ou du thorium, les pastilles obtenues par le procédé conforme à l'invention allient une taille de grains supérieure dans la phase plutonifère ou thorifère, laissant présager une augmentation significative des performances du combustible en réacteur par une diminution des taux de combustion locaux et, partant, une réduction du relâchement des gaz de fission.

Il est à noter que l'obtention simultanée des deux phénomènes, à savoir la répartition plus homogène du plutonium ou du thorium et la croissance granulaire accrue dans la phase plutonifère ou thorifère, est observée indépendamment de l'étape à laquelle l'incorporation du composé est réalisée.

D'autres caractéristiques et avantages de l'invention apparaîtront mieux à la lecture du complément de description qui suit, qui se rapporte à des exemples de fabrication de pastilles de combustibles nucléaires à base d'oxyde mixte (U,Pu)O₂ par le procédé conforme à l'invention, et qui se réfère aux dessins annexés.

Bien entendu, les exemples qui suivent ne sont donnés qu'à titre d'illustrations de l'objet de l'invention et ne constituent en aucun cas une limitation de cet objet.

### BRÈVE DESCRIPTION DES DESSINS

La figure 1 correspond à une photographie prise au microscope optique et montrant la microstructure de pastilles de combustible à base d'oxyde mixte (U,Pu)O₂ fabriquées par un premier exemple de mise en oeuvre du procédé conforme à l'invention utilisant du Cr₂O₃ comme additif.
La figure 2 correspond à deux photographies, respectivement A et B, prises au microscope optique à deux grossissements différents, et montrant la microstructure de pastilles de combustible à base d'oxyde mixte (U,Pu)O₂ fabriquées par un procédé analogue à celui utilisé pour réaliser la pastille dont la microstructure est montrée sur la figure 1, mais sans ajout de Cr₂O₃.
La figure 3 correspond à une photographie prise au microscope optique et montrant la microstructure de pastilles de combustible à base d'oxyde mixte (U,Pu)O₂ fabriquées par un deuxième exemple de mise en oeuvre du procédé conforme à l'invention utilisant du Cr₂O₃ comme additif.
La figure 4 correspond à une photographie prise au microscope optique et montrant la microstructure de pastilles de combustible à base d'oxyde mixte (U,Pu)O₂ fabriquées par un troisième exemple de mise en oeuvre du procédé conforme à l'invention utilisant du Cr₂O₃ comme additif.
La figure 5 correspond à deux photographies, respectivement A et B, prises au microscope optique à deux grossissements différents, et montrant la microstructure de pastilles de combustible à base d'oxyde mixte (U,Pu)O₂ fabriquées par un quatrième exemple de mise en oeuvre du procédé conforme à l'invention utilisant de l'UOS comme additif.
La figure 6 correspond à une photographie prise au microscope optique et montrant la microstructure de pastilles de combustible à base d'oxyde mixte (U,Pu)O₂ fabriquées par un cinquième exemple de mise en oeuvre du procédé conforme à l'invention utilisant de l'UOS comme additif.

### EXEMPLES DE MISE EN OEUVRE DU PROCEDE CONFORME A L'INVENTION

### Exemple 1 :

On prépare un mélange primaire de poudres - ou mélange MP1 - de 748,3 g et présentant une teneur massique en plutonium de 25% en co-broyant 543,7 g d'une poudre de UO₂ (U/O ∼ 2,18) et 204,6 g d'une poudre de PuO₂ dans une jarre à boulets pendant 4 heures.

A l'issue de ce broyage, 8 g du mélange MP1 sont brassés avec 0,04 g de Cr₂O₃ (correspondant à une proportion massique de 5000 ppm) dans un mélangeur à turbine (vitesse de rotation de la cuve : 10 tr/min ; vitesse de rotation de la turbine : 3000 tr/min) pendant 3 cycles de 10 minutes chacun.

Le mélange, qui en résulte, est tamisé sur un tamis dont les ouvertures ont une dimension de 80 µm pour ne conserver que les agglomérats de poudre de taille inférieure ou égale à 80 µm.

8,04 g du tamisat sont ensuite mélangés à 12 g d'une poudre de UO₂ identique à celle utilisée pour préparer le mélange MP1, en présence de 0,06 g de stéarate de zinc (StZn) pour obtenir un mélange final de poudres ayant une teneur massique en plutonium de 11%.

Ce mélange final est réalisé dans un mélangeur Turbula pendant 30 minutes et à une vitesse de 60 tr/minute. Sa composition massique est la suivante : 88,5% de UO₂, 11% de PuO₂, 0,2% de Cr₂O₃ et 0,3% de StZn.

Il est ensuite pastillé à l'aide d'une presse hydraulique, sous une pression de 500 MPa. Les pastilles obtenues ont une géométrie cylindrique caractérisée par une hauteur et un diamètre proches de 6 mm.

Elles sont soumises à un frittage à 1700°C sous atmosphère d'argon hydrogéné (95% Ar/5% H₂) et humidifié par 850 ppm d'eau (pH₂/pH₂O ∼ 60), ce qui permet de garantir un potentiel d'oxygène ΔGO₂ d'environ -410 KJ/mol, thermodynamiquement favorable à l'apparition d'une phase liquide propice au grossissement granulaire.

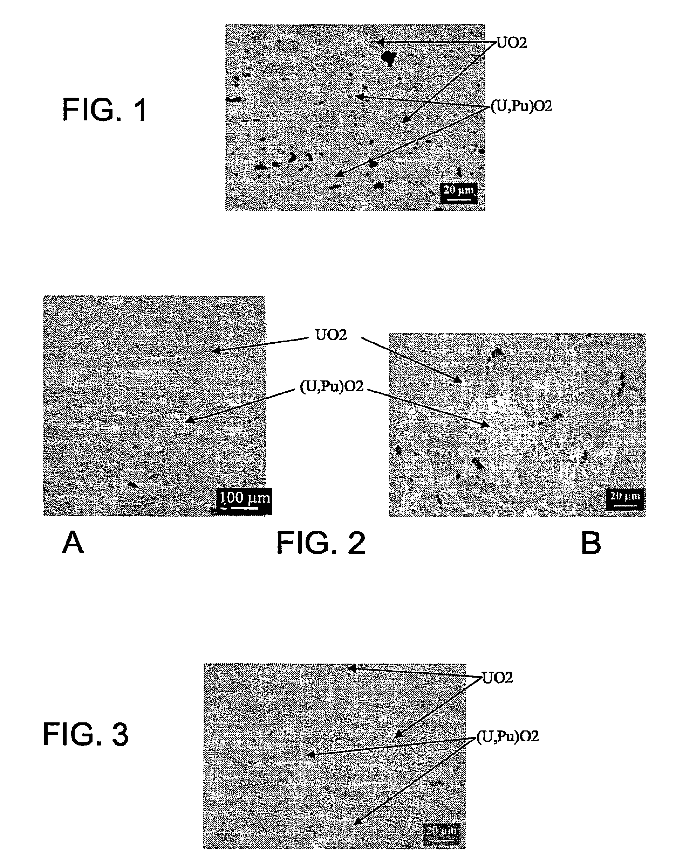

A l'issue de ce frittage, les pastilles se caractérisent par :
- une densité hydrostatique égale à 96,3% de la densité théorique qui est, elle, de 11,02 ;
- une microstructure qui, comme visible sur la figure 1, présente des amas riches en UO₂ (phase uranifère) dispersés dans une matrice contenant le plutonium (phase plutonifère) ;
- une fraction volumique qui est de 40% pour la phase uranifère et de 60% pour la phase plutonifère en microscopie optique ; et
- des grains dont la taille moyenne est de 5 µm dans la phase uranifère et de 17 µm dans la phase plutonifère.

A titre comparatif, des pastilles témoins fabriquées par le même procédé mais sans adjonction de Cr₂O₃ sont caractérisées par :
- une microstructure qui, comme visible sur la figure 2, parties A et B, présente des amas riches en PuO₂ (phase plutonifère) dispersés dans une matrice riche en uranium (phase uranifère) ;
- une fraction volumique qui, sur la base d'analyses optiques, est de 55% pour la phase uranifère et de 45% pour la phase plutonifère ; et
- des grains dont la taille moyenne est de 5 à 6 µm dans la phase uranifère comme dans la phase plutonifère.

Ainsi, la présence de chrome dans les pastilles préparées conformément à l'invention se traduit par une nette diminution du volume de la phase uranifère et des amas (U,Pu)O₂ au profit d'une phase d'enrobage, à teneur intermédiaire en plutonium, qui augmente d'un facteur de 2.

### Exemple 2 :

Une fraction du mélange MP1 préparé dans l'exemple 1 est prélevée et tamisée sur un tamis dont les ouvertures mesurent 250 µm pour ne conserver que les agglomérats de poudre de taille inférieure ou égale à 250 µm.

8 g du tamisat sont ensuite mélangés à 12 g d'une poudre de UO₂ identique à celle utilisée pour préparer le mélange MP1, en présence de 0,04 g de Cr₂O₃ (correspondant à une proportion massique de 2000 ppm) et de 0,06 g de StZn pour obtenir un mélange final de poudres ayant une teneur massique en plutonium de 11%.

Ce mélange final est réalisé dans les mêmes conditions que celles décrites dans l'exemple 1. Sa composition massique est la suivante : 88,5% de UO₂, 11% de PuO₂, 0,2% de Cr₂O₃ et 0,3% de StZn.

Il est ensuite pastillé et les pastilles sont frittées comme décrit dans l'exemple 1.

A l'issue de ce frittage, les pastilles se caractérisent par :
- une densité hydrostatique égale à 96,7% de la densité théorique qui est, elle, de 11,02 ;
- une microstructure qui, comme visible sur la figure 3, présente des amas riches en UO₂ (phase uranifère) dispersés dans une matrice riche en plutonium (phase plutonifère) ;
- une fraction volumique qui, sur la base d'analyses optiques, est de 50% pour la phase uranifère et de 50% pour la phase plutonifère ; et
- des grains dont la taille moyenne est de 5 µm dans la phase uranifère et de 15 µm dans la phase plutonifère.

La présence de chrome dans les pastilles préparées conformément à l'invention est donc à l'origine d'une nette diminution du volume de la phase uranifère et des amas (U,Pu)O₂ au profit d'une phase d'enrobage, à teneur intermédiaire en plutonium, qui augmente d'un facteur de 1,8.

Des pastilles sont également fabriquées en suivant le même protocole opératoire que celui qui vient d'être décrit, exception faite que la fraction du mélange MP1 est tamisée sur un tamis dont les ouvertures mesurent 80 µm pour ne conserver que les agglomérats de poudre de taille inférieure ou égale à cette dimension. Cette différence de tamisage se traduit par une légère augmentation, dans les pastilles, de la fraction volumique de la phase plutonifère qui atteint la valeur de 56%.

### Exemple 3 :

8 g du mélange MP1 préparé dans l'exemple 1 sont brassés avec 0,016 g de Cr₂O₃ correspondant à une proportion massique de 2000 ppm) dans un mélangeur à turbine(vitesse de rotation de la cuve : 10 tr/min ; vitesse de rotation de la turbine : 3000 tr/min) pendant 3 cycles de 10 minutes chacun.

Le mélange, qui en résulte, est tamisé sur un tamis dont les ouvertures mesurent 80 µm pour ne conserver que les agglomérats de poudre de taille inférieure ou égale à 80 µm.

8,016 g du tamisat sont ensuite mélangés à 12 g d'une poudre de UO₂ identique à celle utilisée pour préparer le mélange MP1, en présence de 0,024 de Cr₂O₃ et de 0,06 g de StZn pour obtenir un mélange final de poudres ayant une teneur massique en plutonium de 11%.

Ce mélange est réalisé dans les mêmes conditions que celles décrites dans l'exemple 1. Sa composition massique finale est la suivante : 88,5% de UO₂, 11% de PuO₂, 0,2% de Cr₂O₃ et 0,3% de StZn.

Il est ensuite pastillé et les pastilles sont frittées comme décrit dans l'exemple 1.

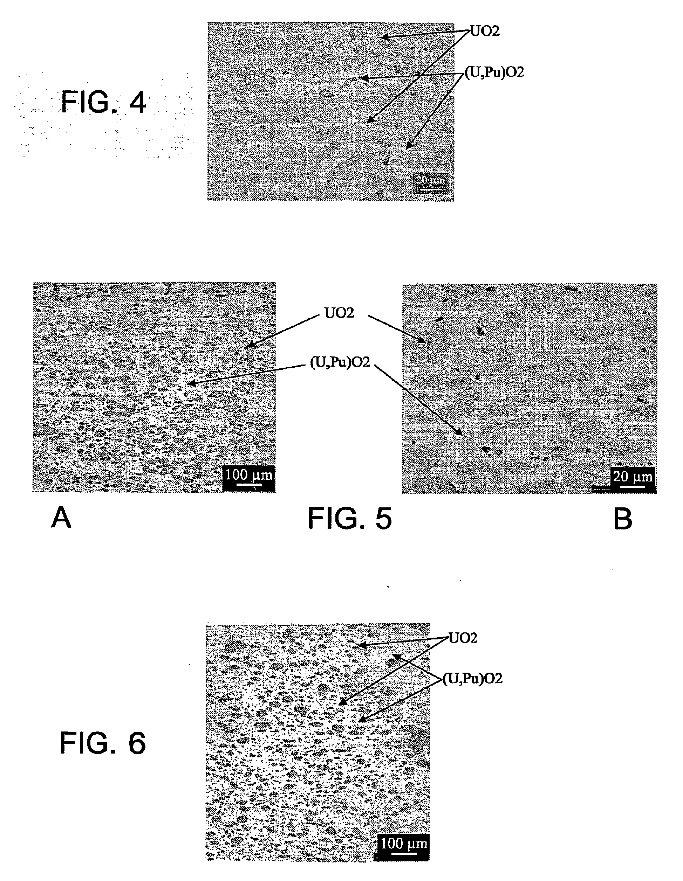

Après frittage, ces pastilles se caractérisent par :
- une densité hydrostatique égale à 95,9% de la densité théorique (11,02) ;
- une microstructure qui, comme visible sur la figure 4, présente des amas riches en UO₂ (phase uranifère) dispersés dans une matrice riche en plutonium (phase plutonifère) ;
- une fraction volumique qui, sur la base d'analyses optiques, est de 30% pour la phase uranifère et de 70% pour la phase plutonifère ; et
- des grains dont la taille moyenne est de 5 µm dans la phase uranifère et de 16 µm dans la phase plutonifère.

Ainsi, la présence de chrome dans les pastilles se traduit par une nette diminution du volume de la phase uranifère au profit de la phase plutonifère qui augmente d'un facteur de 1,6.

### Exemple 4 :

Une fraction du mélange MP1 préparé dans l'exemple 1 est prélevée et tamisée sur un tamis aux ouvertures de 250 µm pour ne conserver que les agglomérats de poudre mesurant au plus 250 µm.

8 g du tamisat sont ensuite mélangés à 12 g d'une poudre de UO₂ identique à celle utilisée pour préparer le mélange MP1, en présence de 0,048 g de UOS (correspondant à une proportion massique de 2400 ppm, soit 270 ppm de soufre élémentaire) et de 0,04 g de StZn pour obtenir un mélange final de poudres ayant une teneur massique en plutonium de 11%.

Ce mélange est réalisé dans un mélangeur Turbula pendant 30 minutes et à une vitesse de 60 tr/minute.

Sa composition massique finale est la suivante : 88,56% de UO₂, 11% de PuO₂, 0,24% de UOS et 0,2% de StZn.

Il est ensuite pastillé au moyen d'une presse hydraulique, sous une pression de 500 MPa. Les pastilles obtenues ont une géométrie cylindrique caractérisée par une hauteur et un diamètre proches de 6 mm.

Elles sont soumises à un frittage à 1700°C sous atmosphère d'argon hydrogéné (95% Ar/5% H₂) et humidifié par 1000 ppm d'eau (pH₂/pH₂O ∼ 50).

A l'issue de ce frittage, les pastilles se caractérisent par :
- une densité hydrostatique égale à 96,4% de la densité théorique (11,02) ;
- une microstructure qui, comme visible sur la figure 5, présente des amas riches en UO₂ (phase uranifère) dispersés dans une matrice riche en plutonium (phase plutonifère) ;
- une fraction volumique qui, sur la base d'analyses optiques, est de 30% pour la phase uranifère et de 70% pour la phase plutonifère ; et
- des grains dont la taille moyenne est de 5 µm dans la phase uranifère et de 13 µm dans la phase plutonifère.

Là également, la présence de soufre dans les pastilles se traduit par une nette diminution du volume de la phase uranifère au profit de la phase plutonifère qui augmente d'un facteur de 1,6 à 1,8.

Des pastilles sont également fabriquées en suivant le même protocole opératoire que celui qui vient d'être décrit, exception faite que la fraction du mélange MP1 est tamisée sur un tamis dont les ouvertures mesurent 80 µm pour ne conserver que les agglomérats de poudre de taille inférieure ou égale à ces ouvertures. Cette différence de tamisage se traduit par une augmentation, dans les pastilles, de la fraction volumique de la phase plutonifère qui atteint la valeur de 80%.

### Exemple 5 :

8 g du mélange MP1 préparé dans l'exemple 1 sont prélevés et brassés avec 0,019 g de UOS (correspondant à une proportion massique de 2400 ppm) dans un mélangeur Turbula, pendant 10 minutes et à une vitesse de rotation de la cuve de 60 tr/minute.

Le mélange, qui en résulte, est tamisé sur un tamis dont les ouvertures mesurent 80 µm pour ne conserver que les agglomérats de poudre de taille inférieure ou égale à 80 µm.

8,019 g du tamisat sont ensuite mélangés à 12 g d'une poudre de UO₂ identique à celle utilisée pour préparer le mélange MP1, en présence de 0,029 g de UOS et de 0,04 g de StZn pour obtenir un mélange final de poudres ayant une teneur massique en plutonium de 11%.

Ce mélange est réalisé dans les mêmes conditions que celles décrites dans l'exemple 4. Sa composition massique finale est la suivante : 88,56% de UO₂, 11% de PuO₂, 0,24% de UOS et 0,2% de StZn.

Il est ensuite pastillé et les pastilles sont frittées comme décrit dans l'exemple 4.

Après frittage, ces pastilles se caractérisent par :
- une densité hydrostatique égale à 96,4% de la densité théorique (11,02) ;
- une microstructure qui, comme visible sur la figure 6, présente des amas riches en UO₂ (phase uranifère) dispersés dans une matrice riche en plutonium (phase plutonifère) ;
- une fraction volumique qui, sur la base d'analyses optiques, est de 25% pour la phase uranifère et de 75% pour la phase plutonifère ; et
- des grains dont la taille moyenne est de 5 µm dans a phase uranifère et de 10 µm dans la phase plutonifère.

La présence de soufre dans les pastilles est donc à l'origine d'une nette diminution du volume de la phase uranifère au profit de la phase plutonifère qui augmente d'un facteur de 1,7.

Le tableau 1 ci-après regroupe les valeurs précédemment mentionnées des fractions volumiques des phases uranifère et plutonifère déterminées sur la base d'analyses optiques - ce type d'analyses représentant la méthode de référence - pour les pastilles fabriquées conformément à l'invention dans les exemples 1 à 5, ainsi que celles des pastilles témoins décrites dans l'exemple 1.

Ce tableau présente également les valeurs des fractions volumiques de ces mêmes phases telles qu'obtenues sur la base d'analyses électroniques, plus précisément d'analyses à la microsonde électronique, pour les pastilles fabriquées conformément à l'invention dans les exemples 1, 2 et 4 et pour lesdites pastilles témoins.

Ces dernières valeurs diffèrent sensiblement des valeurs précédentes, les analyses à la microsonde électronique permettant, en effet, de déterminer les fractions volumiques des différentes phases constitutives des pastilles de façon beaucoup plus précise que les analyses optiques de référence, en prenant en compte la concentration de chaque élément.

**TABLEAU 1**

| **Pastilles** | | **Fractions volumiques (%) analyses optiques** | | **Fractions volumiques (%) analyses électroniques** | |
|---|---|---|---|---|---|
| | | Phase uranifère | Phase plutonifère | Phase uranifère | Phase plutonifère |
| Exemple 1 | | 40 | 60 | 21 | 79 |
| | | | | | |
| Exemple 2 | | | | | |
| | • tamisage à 250 µm | 50 | 50 | 23 | 77 |
| | • tamisage à 80 µm | 44 | 56 | | |
| | | | | - | - |
| Exemple 3 | | 30 | 70 | | |
| | | | | | |
| Exemple 4 | | | | | |
| | • tamisage à 250 µm | 30 | 70 | - | - |
| | • tamisage à 80 µm | 20 | 80 | 5 | 95 |
| | | | | | |
| Exemple 5 | | 25 | 75 | | |
| | | | | - | - |
| Témoins | | 55 | 45 | 36 | 64 |

### BIBLIOGRAPHIE

- **[1]**: EP-A-1 081 716
- **[2]**: FR-A-2 738 076 & US-A-5,841,200
- **[3]**: US-B- 6,235,223
- **[4]**: WO-A-00/49621
- **[5]**: FR-A-2 827 071

## Revendications

1. Procédé de fabrication de pastilles d'un combustible nucléaire à base d'oxyde mixte d'uranium et de plutonium ou d'oxyde mixte d'uranium et de thorium, ayant une teneur spécifiée en plutonium ou en thorium, ledit procédé comprenant les étapes suivantes :
a) préparation d'un mélange primaire de poudres ayant une teneur en plutonium ou en thorium supérieure à la teneur spécifiée du combustible, par co-broyage d'une poudre P1 de UO₂ et d'une poudre P2 de PuO₂ ou de ThO₂,
b) tamisage du mélange primaire de poudres,
c) préparation d'un mélange final de poudres ayant la teneur spécifiée en plutonium ou en thorium du combustible par mélange du tamisat obtenu à l'étape b) avec une poudre P3 de UO₂ et, éventuellement, un ou plusieurs adjuvants,
d) pastillage du mélange final de poudres ainsi obtenu, et
e) frittage des pastilles obtenues,
et étant **caractérisé en ce qu'**on incorpore au moins un composé choisi dans le groupe constitué par les oxydes de chrome, d'aluminium, de titane, de magnésium, de vanadium et de niobium, leurs précurseurs et les composés inorganiques aptes à apporter l'élément soufre au cours de l'étape e), à au moins l'une des poudres P1, P2 et P3 et/ou au moins l'un des mélanges primaire ou final de poudres.

2. Procédé selon la revendication 1, **caractérisé en ce que** le composé est du sesquioxyde de chrome (Cr₂O₃) ou un précurseur de celui-ci.

3. Procédé selon la revendication 2, **caractérisé en ce que**, le composé étant du Cr₂O₃, la teneur massique en Cr₂O₃ du mélange final de poudres est de 500 à 5000 ppm, de préférence de 1500 à 3000 ppm.

4. Procédé selon la revendication 1, **caractérisé en ce que** le composé est un composé inorganique apte à apporter l'élément soufre au cours de l'étape e).

5. Procédé selon la revendication 4, **caractérisé en ce que** la teneur massique du mélange final de poudres en composé est telle qu'il permet d'apporter de 50 à 2000 ppm de soufre élémentaire, de préférence de 50 à 1000 ppm de soufre élémentaire.

6. Procédé selon l'une quelconque des revendications 1, 4 ou 5, **caractérisé en ce que** le composé est de l'oxysulfure d'uranium (UOS).

7. Procédé selon la revendication 6, **caractérisé en ce que** la teneur massique en UOS du mélange final de poudres est de 440 ppm à 18000 ppm, de préférence de 440 à 9000 ppm.

8. Procédé selon l'une quelconque des revendications précédentes, **caractérisé en ce que** le composé est incorporé, en tout ou partie, dans le mélange primaire de poudres au cours de l'étape a) ou entre l'étape a) et l'étape b).

9. Procédé selon l'une quelconque des revendications 1 à 7, **caractérisé en ce que** le composé est incorporé, en tout ou partie, dans le mélange final de poudres au cours de l'étape c).

10. Procédé selon l'une quelconque des revendications précédentes, **caractérisé en ce que** le composé est utilisé sous forme pulvérulente.

11. Procédé selon l'une quelconque des revendications précédentes, **caractérisé en ce que** la teneur massique en plutonium ou en thorium du mélange primaire de poudres est de 25 à 35%.

12. Procédé selon l'une quelconque des revendications précédentes, **caractérisé en ce que** la teneur massique en plutonium ou en thorium du mélange final de poudres est de 3 à 12%.

13. Procédé selon l'une quelconque des revendications précédentes, **caractérisé en ce que** de la chamotte est ajoutée au mélange primaire de poudres et/ou au mélange final de poudres.

14. Procédé selon l'une quelconque des revendications précédentes, **caractérisé en ce que** le ou les adjuvants mélangés au tamisat au cours de l'étape c) sont choisis parmi les agents lubrifiants et les agents porogènes.

15. Procédé selon l'une quelconque des revendications précédentes, **caractérisé en ce que** le frittage des pastilles est réalisé à une température d'environ 1700°C, sous une atmosphère gazeuse conduisant à un potentiel d'oxygène ΔGO₂ de -476 à -372 KJ/mol à la température de frittage.

16. Procédé selon la revendication 14, **caractérisé en ce que** l'atmosphère gazeuse est un mélange d'argon et d'hydrogène humidifié, contenant 5% d'hydrogène et dont la teneur en eau est de 100 à 2500 ppm.

## Patentansprüche

1. Verfahren zur Herstellung von Kernbrennstoffpastillen auf Basis eines Mischoxids von Uran und Plutonium oder eines Mischoxids von Uran und Thorium, mit einem spezifizierten Gehalt an Plutonium oder an Thorium, wobei das Verfahren die folgenden Schritte umfasst:
a) Herstellen einer primären Mischung von Pulvern mit einem Gehalt an Plutonium oder an Thorium größer als der spezifizierte Gehalt des Brennstoffs durch gemeinsame Zerkleinerung eines Pulvers P1 aus UO₂ und eines Pulvers P2 aus PuO₂ oder aus ThO₂,
b) Sieben der primären Mischung von Pulvern,
c) Herstellen einer finalen Mischung von Pulvern mit dem spezifizierten Gehalt an Plutonium oder an Thorium des Brennstoffs durch Mischen des im Schritt b) erhaltenen Siebguts mit einem Pulver P3 aus UO₂ und, gegebenenfalls, einem oder mehreren Zusatzmitteln,
d) Vorpressen der derart erhaltenen finalen Mischung von Pulvern, und
e) Sintern der erhaltenen Pastillen,
und **dadurch gekennzeichnet, dass** man wenigstens einem der Pulver P1, P2 und P3 und/oder wenigstens der primären oder der finalen Mischung von Pulvern im Verlauf des Schritts e) wenigstens eine Verbindung hinzufügt, ausgewählt aus der Gruppe gebildet durch die Oxide von Chrom, Aluminium, Titan, Magnesium, Vanadium und Niob, ihre Vorläufer sowie die anorganischen Verbindungen, die geeignet sind, das Element Schwefel einzubringen.

2. Verfahren nach Anspruch 1, **dadurch gekennzeichnet, dass** die Verbindung Chrom (III)-Oxid ist (Cr₂O₃) oder ein Vorläufer desselben.

3. Verfahren nach Anspruch 2, **dadurch gekennzeichnet, dass**, wenn die Verbindung Cr₂O₃ ist, der Massengehalt der finalen Mischung von Pulvern an Cr₂O₃ von 500 bis 5.000 ppm ist, vorzugsweise von 1.500 bis 3.000 ppm.

4. Verfahren nach Anspruch 1, **dadurch gekennzeichnet, dass** die Verbindung eine anorganische Verbindung ist, die geeignet ist, im Verlauf des Schritts e) Schwefel einzubringen.

5. Verfahren nach Anspruch 4, **dadurch gekennzeichnet, dass** der Massengehalt der finalen Mischung von Pulvern an der Verbindung derart ist, dass er es erlaubt, von 50 bis 2.000 ppm elementaren Schwefels einzubringen, vorzugsweise von 50 bis 1.000 ppm elementaren Schwefels.

6. Verfahren nach einem der Ansprüche 1, 4 oder 5, **dadurch gekennzeichnet, dass** die Verbindung Uranoxisulfid (UOS) ist.

7. Verfahren nach Anspruch 6, **dadurch gekennzeichnet, dass** der Massengehalt der finalen Mischung von Pulvern an UOS von 440 ppm bis 18.000 ppm ist, vorzugsweise von 440 bis 9.000 ppm.

8. Verfahren nach einem der vorhergehenden Ansprüche, **dadurch gekennzeichnet, dass** die Verbindung ganz oder teilweise in die primäre Mischung von Pulvern im Verlauf des Schritts a) oder zwischen dem Schritt a) und dem Schritt b) zugefügt wird.

9. Verfahren nach einem der Ansprüche 1 bis 7, **dadurch gekennzeichnet, dass** die Verbindung ganz oder teilweise in die finale Mischung von Pulvern im Verlauf des Schritts c) zugefügt wird.

10. Verfahren nach einem der vorhergehenden Ansprüche, **dadurch gekennzeichnet, dass** die Verbindung in pulverartiger Form verwendet wird.

11. Verfahren nach einem der vorhergehenden Ansprüche, **dadurch gekennzeichnet, dass** der Massengehalt der primären Mischung von Pulvern an Plutonium oder an Thorium von 25 bis 35 % ist.

12. Verfahren nach einem der vorhergehenden Ansprüche, **dadurch gekennzeichnet, dass** der Massengehalt der finalen Mischung von Pulvern an Plutonium oder an Thorium von 3 bis 12 % ist.

13. Verfahren nach einem der vorhergehenden Ansprüche, **dadurch gekennzeichnet, dass** der primären Mischung von Pulvern und/oder der finalen Mischung von Pulvern Schamotte beigefügt wird.

14. Verfahren nach einem der vorhergehenden Ansprüche, **dadurch gekennzeichnet, dass** das oder die Zusatzmittel, das/die im Verlauf des Schritts c) mit dem Siebgut gemischt werden, aus den Schmiermitteln und den porogenen Mitteln ausgewählt sind.

15. Verfahren nach einem der vorhergehenden Ansprüche, **dadurch gekennzeichnet, dass** das Sintern der Pastillen bei einer Temperatur von ungefähr 1.700°C realisiert wird in einer Gasatmosphäre, die bei der Sintertemperatur zu einem Sauerstoffpotenzial ΔGO₂ von -476 bis -372 KJ/Mol führt.

16. Verfahren nach Anspruch 14, **dadurch gekennzeichnet, dass** die Gasatmosphäre eine angefeuchtete Mischung von Argon und Wasserstoff ist, die 5 % Wasserstoff enthält, und deren Wassergehalt von 100 bis 2.500 ppm beträgt.

## Claims

1. Process for producing pellets of a nuclear fuel based on a uranium and plutonium mixed oxide or a uranium and thorium mixed oxide having a specified plutonium or thorium content, the said process comprising the following steps:
a) preparing a primary mixture of powders having a plutonium or thorium content greater than the specified content of the fuel, by co-milling a UO₂ powder P1 and a PuO₂ or ThO₂ powder P2,
b) sieving the primary mixture of powders,
c) preparing a final mixture of powders having the specified plutonium or thorium content of the fuel by mixing the undersize obtained in step b) with a UO₂ powder P3 and, optionally, one or more additives,
d) pelleting the final mixture of powders so obtained, and
e) sintering the pellets obtained,
and being **characterized in that** at least one compound chosen from the group consisting of the oxides of chromium, aluminium, titanium, magnesium, vanadium and niobium, precursors thereof and inorganic compounds capable of providing the element sulphur during step e), is incorporated in at least one of the powders P1, P2 and P3 and/or into at least one of the primary or final mixtures of powders.

2. Process according to Claim 1, **characterized in that** the compound is chromium sesquioxide (Cr₂O₃) or a precursor thereof.

3. Process according to Claim 2, **characterized in that**, the compound being Cr₂O₃, the mass content of Cr₂O₃ in the final mixture of powders is 500 to 5000 ppm, preferably 1500 to 3000 ppm.

4. Process according to Claim 1, **characterized in that** the compound is an inorganic compound capable of providing the element sulphur during step e).

5. Process according to Claim 4, **characterized in that** the mass content of the compound in the final mixture of powders is such that it enables 50 to 2000 ppm of elementary sulphur to be provided, preferably 50 to 1000 ppm of elementary sulphur.

6. Process according to any one of Claims 1, 4 or 5, **characterized in that** the compound is uranium oxysulphide (UOS).

7. Process according to Claim 6, **characterized in that** the mass content of UOS in the final mixture of powders is 440 to 18000 ppm, preferably 440 to 9000 ppm.

8. Process according to any one of the preceding claims, **characterized in that** all or part of the compound is incorporated in the primary mixture of powders during step a) or between step a) and step b).

9. Process according to any one of Claims 1 to 7, **characterized in that** all or part of the compound is incorporated in the final mixture of powders during step c).

10. Process according to any one of the preceding claims, **characterized in that** the compound is used in powdered form.

11. Process according to any one of the preceding claims, **characterized in that** the mass content of plutonium or thorium in the primary mixture of powders is 25 to 35%.

12. Process according to any one of the preceding claims, **characterized in that** the mass content of plutonium or thorium in the final mixture of powders is 3 to 12%.

13. Process according to any one of the preceding claims, **characterized in that** chamotte is added to the primary mixture of powders and/or to the final mixture of powders.

14. Process according to any one of the preceding claims, **characterized in that** the additive or additives mixed with the undersize during step c) are chosen from lubricating agents or porogenic agents.

15. Process according to any one of the preceding claims, **characterized in that** the pellets are sintered at a temperature of about 1700°C in a gaseous atmosphere leading to an oxygen potential ΔGO₂ of -476 to -372 KJ/mol at the sintering temperature.

16. Process according to Claim 14, **characterized in that** the gaseous mixture is a humidified mixture of argon and hydrogen, containing 5% hydrogen and in which the water content is from 100 to 2500 ppm.
